# EUROPÄISCHE PATENTANMELDUNG

(11) **EP 3 890 290 A1**
(43) Veröffentlichungstag der Anmeldung: **06.10.2021**
(21) Anmeldenummer: 21166006.3
(22) Anmeldetag: 30.03.2021
(51) Int. Cl.: H04M 1/677, H04M 1/247

(54) **KOMMUNIKATIONSVORRICHTUNG, INSBESONDERE FÜR KINDER, UND SYSTEM MIT EINER SOLCHEN KOMMUNIKATIONSVORRICHTUNG**

(30) Priorität: 02.04.2020 DE 202020101791 U
(71) Anmelder: Tiger Media Deutschland GmbH, 20355 Hamburg (DE)
(72) Erfinder: WEITENDORF, Till, 20144 Hamburg (DE)
(74) Vertreter: Lemcke, Brommer & Partner Patentanwälte Partnerschaft mbB

(57) **Zusammenfassung**

Die Erfindung betrifft eine Kommunikationsvorrichtung (1), insbesondere für Kinder (B), mit:
einer Aufnahmeeinheit (2a), einer Wiedergabeeinheit (2b), einer Kommunikationseinheit (4), die zum Verbinden der Kommunikationsvorrichtung (1) mit wenigstens einer anderen Kommunikationsvorrichtung (10, 30, 20.1, 20.2) über einen Kommunikationskanal in einem Netzwerk (9) ausgebildet ist;
einer Leseeinheit (6), die zum Lesen einer Kennung (8a, 8a') von einem getrennt von der Kommunikationsvorrichtung (1) ausgebildeten Kennungsträger (8, 8') ausgebildet ist; und
einer Steuereinheit (5), die nach Maßgabe von Konfigurationsdaten (KD) dazu ausgebildet ist, in Abhängigkeit von der Kennung (8a, 8a') zumindest die andere Kommunikationsvorrichtung (20.1, 20.2) eindeutig zu identifizieren und die Kommunikationseinheit (4) zum Verbinden der Kommunikationsvorrichtung (1) mit der anderen Kommunikationsvorrichtung (20.1, 20.2) über den Kommunikationskanal anzusteuern.

## Beschreibung

Die Erfindung betrifft eine Kommunikationsvorrichtung, insbesondere für Kinder, gemäß Anspruch 1.

Außerdem betrifft die Erfindung ein System mit einer erfindungsgemäßen Kommunikationsvorrichtung gemäß Anspruch 13.

Formen der elektronischen Kommunikation, insbesondere die Verwendung von Kommunikationsvorrichtungen in Form von digitalen Endgeräten, spielen heutzutage eine immer wichtigere Rolle. Selbst kleinere Kinder verfügen heutzutage regelmäßig bereits über Mobiltelefone bzw. Smartphones und verwenden diese, um mit Familienangehörigen, Freunden und Bekannten zu kommunizieren. Diesbezüglich existieren eine Vielzahl von möglichen Kommunikationskanälen, die von herkömmlichen Telefonverbindungen bis hin zu Video-Chats oder dergleichen reichen.

Hieran ist insbesondere als nachteilig bzw. als gefährlich anzusehen, dass Eltern bzw. Erziehungsberechtigte nur noch schwer bzw. mit erheblichem Aufwand das digitale Kommunikationsverhalten ihrer Kinder kontrollieren bzw. überwachen können. Außerdem können herkömmliche Mobiltelefone bzw. Smartphones für (kleinere) Kinder schwierig zu handhaben sein.

Darüber hinaus halten heutzutage verstärkt neuartige Geräte (nachfolgend auch als "Boxen" bezeichnet) Einzug ins Kinderzimmer, welche Geräte speziell dazu ausgebildet und vorgesehen sind, über eine (drahtlose) Kommunikationsverbindung zu einem externen Datenserver kindgerechte digitale Medieninhalte auch schon für kleinste Kinder auf sichere Weise verfügbar zu machen. In diesem Zusammenhang ist es als nachteilig anzusehen, dass auf diese Weise ein weiteres elektronisches Gerät auf den Markt gebracht wird, was mit einem entsprechenden Ressourcenverbrauch einhergeht.

Der Erfindung liegt die Aufgabe zugrunde, eine Kommunikationsvorrichtung, insbesondere zur Verwendung durch Kinder, anzugeben, mit der sich insbesondere die eingangs angesprochene Sicherheits- bzw. Überwachungsproblematik überwinden lässt. Außerdem soll im Rahmen der Erfindung durch mögliche Funktionsintegration die Möglichkeit bestehen, dem weiter oben beklagten Ressourcenverbrauch entgegenzuwirken.

Zur Lösung dieser Aufgaben schlägt die Erfindung eine Kommunikationsvorrichtung mit den Merkmalen des Anspruchs 1 sowie ein System mit den Merkmalen des Anspruchs 13 vor. Vorteilhafte Weiterentwicklungen der erfindungsgemäßen Kommunikationsvorrichtung bzw. des erfindungsgemäßen Systems sind in den Unteransprüchen definiert.

Erfindungsgemäß vorgeschlagen wird eine Kommunikationsvorrichtung, insbesondere für Kinder, mit: einer Aufnahmeeinheit, die zum Aufnehmen von Aufnahmedaten ausgebildet ist, insbesondere Audio- und/oder Videodaten; einer Wiedergabeeinheit, die zum Wiedergeben von Wiedergabedaten ausgebildet ist, insbesondere Audio- und/oder Videodaten; einer Kommunikationseinheit, die zum Verbinden der Kommunikationsvorrichtung mit wenigstens einer anderen Kommunikationsvorrichtung über einen Kommunikationskanal in einem Netzwerk ausgebildet ist; einer Sendeeinheit, die zum Senden zumindest der Aufnahmedaten zu einer anderen Kommunikationsvorrichtung über den Kommunikationskanal in dem Netzwerk ausgebildet ist; einer Empfangseinheit, die zum Empfangen zumindest der Wiedergabedaten von einer anderen Kommunikationsvorrichtung über den Kommunikationskanal in dem Netzwerk ausgebildet ist; einer Leseeinheit, die zum Lesen einer Kennung von einem getrennt von der Kommunikationsvorrichtung ausgebildeten Kennungsträger ausgebildet ist; und einer Steuereinheit, die nach Maßgabe von Konfigurationsdaten dazu ausgebildet ist, in Abhängigkeit von der Kennung zumindest die andere Kommunikationsvorrichtung eindeutig zu identifizieren und die Kommunikationseinheit zum Verbinden der Kommunikationsvorrichtung mit der anderen Kommunikationsvorrichtung über den Kommunikationskanal anzusteuern.

Weiterhin wird erfindungsgemäß ein System mit einer erfindungsgemäßen Kommunikationsvorrichtung und mit einer Verwaltungseinrichtung vorgeschlagen, welche Verwaltungseinrichtung zumindest zeitweise mit der Kommunikationsvorrichtung in einer Kommunikationsverbindung steht und welche Verwaltungseinrichtung eine erste Anwendung ausführt, mittels welcher ersten Anwendung die Konfigurationsdaten festlegbar und/oder änderbar sind.

Nach dem Vorstehenden zeichnet sich eine erfindungsgemäße Kommunikationsvorrichtung insbesondere dadurch aus, dass die in ihr enthaltene Steuereinheit nach Maßgabe der Konfigurationsdaten dazu ausgebildet ist, in Abhängigkeit von der mittels der Leseeinheit ermittelten Kennung zumindest eine andere Kommunikationsvorrichtung eindeutig zu identifizieren und die Kommunikationsvorrichtung über den Kommunikationskanal mit der anderen Kommunikationsvorrichtung zu verbinden, wodurch auch eine zugehörige Kommunikationsform festgelegt wird. In Abhängigkeit von den genannten Konfigurationsdaten ist es also möglich, bestimmte Arten von Kommunikationsformen zu anderen, vorbestimmten Kommunikationsvorrichtungen zu definieren und zu realisieren. Auf diese Weise lässt sich gezielt beeinflussen, mit wem ein Nutzer der Kommunikationsvorrichtung, insbesondere also Kinder, in welcher Form kommunizieren darf. Es ist auf diese Weise insbesondere möglich, die Kommunikation auf bestimmte Kommunikationspartner zu beschränken und in diesem Zusammenhang auch ganz konkrete Vorgaben hinsichtlich der Kommunikationsform (Telefonat, Chat oder dergleichen) und/oder des Datenformats oder -Umfangs zu machen.

Wenn nur Eltern bzw. Erziehungsberechtigte die Möglichkeit erhalten, die genannten Kommunikationsdaten vorzugeben bzw. zu ändern, z.B. in einem passwortgeschützten Elternbereich (der (Software-)Anwendung), ist auf diese Weise sichergestellt, dass Benutzer der Kommunikationsvorrichtung, also insbesondere Kinder, nur derart mittels der Kommunikationsvorrichtung kommunizieren können, dass hiervon keine Gefahr für den Nutzer ausgeht. Mit anderen Worten: Art, Umfang und Ziel der mittels der erfindungsgemäßen Kommunikationsvorrichtung möglichen Kommunikation ist nach Maßgabe durch die Konfigurationsdaten festgelegt bzw. festlegbar. Auch kleinste Kinder können auf diese Weise spielerisch sichere Kommunikationsverbindungen zu vorbestimmten Kommunikationsteilnehmern aufbauen und benutzen.

Bei der ersten Weiterbildung der erfindungsgemäßen Kommunikationsvorrichtung kann vorgesehen sein, dass die Aufnahmeeinheit in die Kommunikationsvorrichtung integriert ist. Alternativ kann jedoch auch vorgesehen sein, dass die Aufnahmeeinheit als von der Kommunikationsvorrichtung separate Aufnahmeeinheit ausgebildet ist. Eine solche separate Aufnahmeeinheit kann insbesondere drahtlos mit der Kommunikationsvorrichtung verbunden bzw. verbindbar ausgebildet sein. Die Erfindung ist allerdings nicht hierauf beschränkt, sondern schließt auch per Kabel oder dergleichen mit der Kommunikationsvorrichtung zu verbindende bzw. verbundene Aufnahmeeinheiten mit ein. Auf diese Weise besteht insbesondere die Möglichkeit, auch ältere Vorrichtungen, die serienmäßig noch nicht über eine Kommunikationsfunktion verfügten, zu einer erfindungsgemäßen Kommunikationsvorrichtung weiterzubilden. Dies betrifft beispielsweise die bekannten Vorrichtungen vom Typ Tigerbox oder Tigerbox touch aus dem Hause der Anmelderin.

Im Zuge einer wieder anderen Weiterbildung der erfindungsgemäßen Kommunikationsvorrichtung kann vorgesehen sein, dass die Kommunikationseinheit dazu ausgebildet ist, eine Verbindung zu einem Computernetzwerk, insbesondere dem Internet, aufzubauen, vorzugsweise drahtlos. Auf diese Weise lässt sich im Rahmen an sich bekannter Technik ohne Weiteres über das Computernetzwerk, beispielsweise das Internet, eine Kommunikationsverbindung zu anderen, hierfür geeigneten Kommunikationsvorrichtungen aufbauen, was dem Fachmann an sich bekannt ist. Die Erfindung ist in diesem Zusammenhang keinesfalls auf drahtlose Kommunikation beschränkt, sondern schließt Ausgestaltungen mit ein, bei denen die Kommunikationsvorrichtung per Kabel oder dergleichen mit einem Computernetzwerk, insbesondere dem Internet, zu verbinden ist.

Im Zuge wieder einer anderen Weiterbildung der erfindungsgemäßen Kommunikationsvorrichtung kann vorgesehen sein, dass der Kommunikationskanal ein unidirektionaler oder ein bidirektionaler Kommunikationskanal ist. Dies ermöglicht vielfältige Einsatzmöglichkeiten der erfindungsgemäßen Kommunikationsvorrichtung. Wenn der Kommunikationskanal ein bidirektionaler Kommunikationskanal ist, lassen sich beispielsweise in herkömmlicher Weise Telefongespräche, Video-Chats oder dergleichen mithilfe der Kommunikationsvorrichtung führen. In diesem Zusammenhang kann die Kommunikationsvorrichtung auch als eine Art Gegensprechanlage fungieren.

Wenn der Kommunikationskanal ein unidirektionaler Kommunikationskanal ist, erfolgt eine Übertragung von Daten nur in einer Richtung, beispielsweise - jedoch ohne Beschränkung - von der Kommunikationsvorrichtung weg hin zu einer anderen Kommunikationsvorrichtung. Auf diese Weise lässt sich die Kommunikationsvorrichtung beispielsweise als Babyphone oder dergleichen einsetzen.

Im Zuge einer anderen, bevorzugten Weiterbildung der erfindungsgemäßen Kommunikationsvorrichtung ist vorgesehen, dass die Aufnahmeeinheit ein Mikrofon und/oder eine Kamera umfasst. Auf diese Weise ist es insbesondere möglich, reine Tonübertragungen oder reine Bildübertragungen vorzusehen. Besonders bevorzugt ist jedoch eine Kombination, wobei die Kommunikationsvorrichtung sowohl zum Übertragen von Bild als auch zum Übertragen von Ton ausgebildet ist, vorzugsweise bidirektional.

Im Zuge einer wieder anderen Weiterbildung der erfindungsgemäßen Kommunikationsvorrichtung kann die Wiedergabeeinheit einen Lautsprecher und/oder ein Display umfassen. Auf diese Weise lassen sich mittels der Kommunikationsvorrichtung insbesondere Töne (Audiodaten) und/oder Bilder (insbesondere Videodaten) wiedergeben, vorzugsweise in Kombination.

Im Zuge einer äußerst bevorzugten Weiterbildung der erfindungsgemäßen Kommunikationsvorrichtung kann die Leseeinheit als RFID- oder NFC-Leseeinheit ausgebildet sein. Die Erfindung ist jedoch keinesfalls auf derartige Ausgestaltungen beschränkt, sondern umfasst alle Arten von Leseeinheiten, mit denen sich in der beanspruchten Weise Kennungen von einem Kennungsträger lesen lassen. Eine Ausgestaltung der Leseeinheit als RFID-/NFC-Leseeinheit ist insbesondere dann vorteilhaft, wenn der Kennungsträger einen entsprechenden Chip umfasst. Alternativ ist es möglich, die Leseeinheit als optische Leseeinheit auszubilden, wenn auf dem Kennungsträger beispielsweise ein optisch lesbarer Code als Kennung aufgedruckt ist. Die Erfindung ist jedoch keinesfalls auf eine bestimmte Art und Ausgestaltung der Leseeinheit oder des Kennungsträgers bzw. der Kennung beschränkt.

In wieder einer anderen Weiterbildung der erfindungsgemäßen Kommunikationsvorrichtung kann vorgesehen sein, dass diese eine Fixiereinheit für Kennungsträger aufweist, mit der sich ein Kennungsträger in einem Lesebereich der Leseeinheit fixieren lässt. Auf diese Weise ist sichergestellt, dass der Kennungsträger nicht abhandenkommen kann, was das Auslesen der Kennung mithilfe der Leseeinheit erschweren oder gar unmöglich machen könnte. Wenn es sich bei dem Kennungsträger um einen als (Chip-)Karte ausgebildeten Kennungsträger handelt, wie er von den bereits angesprochenen Tigerboxen bekannt ist, kann es vorteilhaft sein, wenn die Fixierungseinheit zum Einstecken eines als Karte ausgebildeten Kennungsträgers ausgebildet ist, beispielsweise als Kartenschlitz oder dergleichen. Die Erfindung ist jedoch keinesfalls auf eine bestimmte Fixierungsart beschränkt, sondern schließt alle möglichen Fixierungsarten ein, beispielsweise ein Anhaften, eine magnetische Fixierung, eine elektrostatische Fixierung, ein Festklemmen, Einlegen, Einhängen oder dergleichen.

Eine andere Weiterbildung der erfindungsgemäßen Kommunikationsvorrichtung kann vorsehen, dass die Sendeeinheit die Konfigurationsdaten von einer externen Verwaltungseinrichtung empfängt bzw. für einen solchen Empfang eingerichtet ist, insbesondere mittels der Kommunikationseinheit über das (Computer)-Netzwerk (Internet). Auf diese Weise ist es nicht erforderlich, die Kommunikationsdaten an der Kommunikationsvorrichtung selbst einzugeben bzw. zu ändern. Auch eine solche Ausgestaltung liegt allerdings im Rahmen der Erfindung, wobei dann die Kommunikationsvorrichtung über eine geeignete Eingabemöglichkeit, beispielsweise ein berührungsempfindliches Display und/oder eine Tastatur, verfügen oder damit verbindbar sein muss (z.B. über Bluetooth oder dgl.). Das Empfangen von Konfigurationsdaten von einer externen Verwaltungseinrichtung hat den Vorteil, dass die Kommunikationsdaten auch von einem von der Kommunikationsvorrichtung entfernten Ort aus geändert werden können, was Einsetzmöglichkeiten der Kommunikationsvorrichtung vergrößert. Hierauf wird weiter unten noch genauer eingegangen.

Eine wieder andere Weiterbildung der erfindungsgemäßen Kommunikationsvorrichtung beinhaltet, dass durch die Kommunikationsdaten festgelegt ist, welche Art von Aufnahme- und/oder Wiedergabedaten über welche Art von Kommunikationskanal zu welchem Kennungsträger bzw. zu einem mit dem Kennungsträger (der Kennung) verknüpften Kommunikationsgerät gesendet werden. Wie bereits erwähnt, umfassen mögliche Kommunikationskanäle - ohne Beschränkung - Telefonverbindungen, Text-Chats, Audio-Chats, Video-Chats und dergleichen, ungeachtet ihrer konkreten technischen Realisierung. Die Formulierung "zu welchem Kennungsträger" bedeutet im Kontext der vorliegenden Erfindung, dass jeder Kennungsträger bzw. die auf ihn gespeicherte Kennung eine Art von Kommunikationskanal bzw. die infrage kommenden Aufnahme- und/oder Wiedergabedaten mittels der zugeordneten Konfigurationsdaten eindeutig festlegt. Dies umfasst regelmäßig auch die Kommunikationsteilnehmer, nämlich den Benutzer der Kommunikationsvorrichtung und den Kommunikationsteilnehmer am anderen Ende des Kommunikationskanals, beispielsweise einen Erziehungsberechtigten, einen Freund/eine Freundin, ein sonstiges Familienmitglied oder ein sonstiger Bekannter. Auf diese Weise sind über die Konfigurationsdaten alle wesentlichen Parameter der Kommunikation festlegbar und steuerbar, was dem eingangs dargelegten Kontrollgedanken gerecht wird.

Es wurde bereits darauf hingewiesen, dass im Zuge einer äußerst bevorzugten Weiterbildung der erfindungsgemäßen Kommunikationsvorrichtung diese über eine Babyphone-Funktion verfügen kann, bei deren Aktivierung die Kommunikationsvorrichtung dazu ausgebildet ist, Aufnahmedaten, insbesondere Audiodaten, zu senden, ohne im Gegenzug Wiedergabedaten zu empfangen. Es handelt sich also um eine im Wesentlichen unidirektionale Kommunikation, mit der sich beispielsweise überwachen lässt, ob ein Baby oder Kleinkind ruhig schläft oder ob Umstände vorliegen, die die Anwesenheit eines Erziehungsberechtigten erforderlich machen.

Eine wieder andere Weiterbildung der erfindungsgemäßen Kommunikationsvorrichtung kann vorsehen, dass diese zusätzlich über eine Speichereinheit verfügt. Diese Speichereinheit kann allgemein dazu vorgesehen sein, auf die Kommunikationsvorrichtung herunterzuladende Daten zu speichern oder zumindest zwischenzuspeichern. Im Rahmen der hier in Rede stehenden Weiterbildung kann die Speichereinheit jedoch im Speziellen vorgesehen sein zum Speichern von Wiedergabedaten im Rahmen einer Mailbox-Funktion, bei deren Aktivierung die Kommunikationsvorrichtung dazu ausgebildet ist, Wiedergabedaten zu speichern und zeitversetzt wiederzugeben, wobei bevorzugt die Kommunikationsvorrichtung dazu ausgebildet ist, den Eingang von Wiedergabedaten anzuzeigen. Das Anzeigen des Eingangs von Wiedergabedaten kann beispielsweise durch ein Blinklicht oder dergleichen erfolgen, ohne dass die Erfindung hier beschränkt wäre.

Es kann allgemein vorgesehen sein, dass die Kommunikationsvorrichtung (nach ihrer Einrichtung bzw. Registrierung) zumindest für ausgewählte Kommunikationsteilnehmer "sichtbar" und für eine Kommunikation auswählbar ist. Wiederum kann die mögliche Kommunikation bzw. Kommunikationsform auf die Art von Kommunikation beschränkt sein, welche in den Konfigurationsdaten für den ausgewählte Kommunikationsteilnehmer festgelegt sind. Es kann jedoch vorgesehen sein, dass der ausgewählte Kommunikationsteilnehmer, in der Regel also ein Elternteil oder dgl., über Rechte verfügt, die Art der Kommunikation selbst (auch ad hoc) auszuwählen.

In Weiterbildung dieser Idee kann vorgesehen sein, dass ein Benutzer der Kommunikationsvorrichtung eine eingehende Kommunikationsanfrage von einem Kommunikationsteilnehmer annehmen bzw. bestätigen muss, z.B. durch Bedienen eines hierfür vorgesehenen Bedienelements ("Anruf annehmen"). Falls dies während einer vorbestimmten (einstellbaren) Zeit nicht geschieht, kann die oben beschriebene Mailbox-Funktion aktiv werden (sofern sie nicht bereits vorab aktiviert war) und eine eingehende Nachricht (Sprache und/oder Bild oder auch Text bzw. allgemein Wiedergabedaten) aufzeichnen.

Bei einer ersten Weiterbildung des erfindungsgemäßen Systems ist vorgesehen, dass dieses weiterhin mindestens ein digitales Endgerät umfasst, welches digitale Endgerät beispielsweise als Smartphone, Tablet-PC oder dergleichen ausgebildet sein kann. Das digitale Endgerät steht zumindest zeitweise mit der Verwaltungseinrichtung in einer Kommunikationsverbindung, vorzugsweise über das Internet oder ein Telefonnetz. Dabei ist das digitale Endgerät dazu ausgebildet, eine zweite Anwendung auszuführen, mittels welcher zweiten Anwendung die erste Anwendung steuerbar ist.

Mit anderen Worten: Mittels des digitalen Endgeräts bzw. der darauf ausgeführten zweiten Anwendung ist es möglich, über die Kommunikationsverbindung auf die Verwaltungseinrichtung bzw. die dort ausgeführte erste Anwendung zuzugreifen, um die Konfigurationsdaten festzulegen und/oder zu ändern. Auf diese Weise können beispielsweise Eltern oder sonstige Erziehungsberechtigte aus der Entfernung mittels des digitalen Endgeräts über die Verwaltungseinrichtung auf die Kommunikationsvorrichtung zugreifen, um mittels einer entsprechenden Einrichtung bzw. Anpassung der Konfigurationsdaten die mittels der Kommunikationsvorrichtung realisierbaren Kommunikationskanäle und Kommunikationsformen zu steuern. Insbesondere Kinder können auf diese Weise nur über solche Kommunikationskanäle bzw. mit solchen Kommunikationspartnern kommunizieren, die über die Konfigurationsdaten und insbesondere mittels des digitalen Endgeräts bzw. der genannten zweiten Anwendung vorab festgelegt wurden.

Eine andere Weiterbildung des erfindungsgemäßen Systems sieht vor, dass dieses wenigstens noch einen separat von der Kommunikationsvorrichtung ausgebildeten Kennungsträger aufweist. Dieser Kennungsträger umfasst eine Kennung, die durch die Leseeinheit der Kommunikationsvorrichtung auslesbar ist. Vorzugsweise kann der Kennungsträger in Form einer Karte bzw. Chip-Karte ausgebildet sein, höchst vorzugsweise in Form einer Karte mit integriertem RFID- oder NFC-Chip, auf welchem Chip die Kennung gespeichert ist. Allerdings ist die Erfindung, wie bereits ausgeführt, nicht auf Karten bzw. nicht auf RFID-/NFC-Technik als Kennungsträger beschränkt. Grundsätzlich kann jedes physikalische Objekt, beispielsweise eine Spielzeugfigur oder dergleichen, als Kennungsträger fungieren, sofern es eine durch die Leseeinheit auslesbare Kennung umfasst. Diese Kennung kann auf einem in dem Kennungsträger integrierten Chip gespeichert sein, wie vorstehend beschrieben. Es besteht alternativ die Möglichkeit, die Kennung auf den Kennungsträger aufzudrucken, sodass sie durch eine optisch wirksame Leseeinheit lesbar ist. Die Erfindung ist auf keine dieser konkreten Ausgestaltungen beschränkt.

Besonders vorteilhaft hat es sich erwiesen, wenn der Kennungsträger zudem eine grafische Ausgestaltung aufweist, zum Beispiel eine Form, einen Umriss, eine Farbe, einen Aufdruck oder einen Aufkleber, welche Ausgestaltung ihn einem Kommunikationsteilnehmer oder einer betreffenden Kennung, d. h. einem Kommunikationskanal und einer Kommunikationsform, zuordnet.

Beispielsweise könnte ein als Karte ausgebildeter Kennungsträger mit integriertem NFC-Chip die Umrissform eines Frauenkopfes aufweisen. Ein solcher Kennungsträger ließe sich dann kommunikationstechnisch vorteilhafterweise einem weiblichen Kommunikationsteilnehmer, beispielsweise der Mutter, zuordnen. Sobald die Leseeinheit diesen speziellen Kennungsträger bzw. die darauf gespeicherte Kennung erfasst, wird automatisch ein Kommunikationskanal zur Mutter, d.h. zu einer Kommunikationsvorrichtung der Mutter, beispielsweise zum Smartphone der Mutter, aufgebaut. Je nach Festlegung in den Konfigurationsdaten kann diese Kommunikationsverbindung beispielsweise als Telefonverbindung ausgebildet sein, sodass also die Kommunikationsvorrichtung des Kindes automatisch das Mobiltelefon der Mutter anrufen würde. Alternativ ließe sich festlegen, dass die Kommunikationsverbindung als Video-Chat oder dergleichen eingerichtet wird. Ein anderer als Karte ausgebildeter Kennungsträger mit integriertem NFC-Chip könnte die Umrissform eines Männerkopfes aufweisen. Ein solcher Kennungsträger ließe sich dann kommunikationstechnisch vorteilhafterweise einem männlichen Kommunikationsteilnehmer, beispielsweise dem Vater, zuordnen, usw. Mit Figuren ließe sich eine ähnliche Zuordnung erreichen. Zusätzlich oder alternativ können beliebige Kennungsträger, auch in Blankoform, beklebt, bemalt, beschrieben werden, um eine Zuordnung zu einem bestimmten Kommunikationsteilnehmer herzustellen.

Es wurde bereits darauf hingewiesen, dass die Kommunikationsvorrichtung neben Eingabemitteln für Bild und Ton auch noch weitere Eingabemittel, wie beispielsweise ein berührungsempfindliches Display und/oder eine Tastatur, aufweisen kann, die separat ausgebildet und auf geeignete Weise mit der Vorrichtung verknüpft sein können, insbesondere drahtlos. Auf diese Weise ist es insbesondere auch möglich, über die eingerichtete Kommunikationsverbindung Texteingaben, Zeichnungen oder dergleichen zu übertragen. Die Erfindung ist hier nicht auf eine bestimmte Kommunikationsform (Kommunikationskanal und/oder Datenart) beschränkt.

Besonders vorteilhaft ist es, wenn das System nicht nur einen Kennungsträger, sondern verschiedene Kennungsträger umfasst, die beispielsweise über ihre grafische Ausgestaltung voneinander unterscheidbar sind. So könnte beispielsweise ein Kennungsträger den Familienvater repräsentieren, während ein anderer Kennungsträger die Mutter, den Bruder, die Schwester, die Großmutter, den Großvater oder einen Freund/eine Freundin darstellt, wie oben bereits angesprochen. Dies kann beispielsweise über den Umriss des Kennungsträgers geschehen. Zusätzlich oder alternativ können Farben, Aufdrucke oder Aufkleber verwendet werden, um die Kennungsträger unterscheidbar zu machen. Beispielsweise kann der Name einer Person auf dem Kennungsträger vermerkt sein. Zusätzlich oder alternativ ließe sich beispielsweise ein Foto des Kommunikationsteilnehmers auf dem zugehörigen Kennungsträger aufkleben. Der Fantasie sind hier keine Grenzen gesetzt.

Auf diese Weise ist es selbst für kleine Kinder möglich, durch einfaches Handhaben der Kennungsträger sichere, vordefinierte Kommunikationskanäle zu vorausgewählten Kommunikationsteilnehmern aufzubauen, ohne hierbei Gefahr zu laufen, mit unbekannten Personen in unkontrollierten Austausch zu treten. Auch eine vollständige Kostenkontrolle ist auf diese Weise möglich.

Schließlich kann bei einer anderen Weiterbildung des erfindungsgemäßen Systems noch vorgesehen sein, dass dieses einen extern bezüglich der Kommunikationsvorrichtung ausgebildeten Datenserver umfasst. Auf diesem Datenserver können digitale Medieninhalte gespeichert sein, beispielsweise und ohne Beschränkung Audio- und/oder Videodaten, zum Beispiel Hörbücher, Hörspiele, Musikstücke, Filme oder Folgen einer Serie. Die Kommunikationsvorrichtung steht zumindest zeitweise mit dem Datenserver in einer Kommunikationsverbindung, über welche Kommunikationsverbindung eine Auswahl der digitalen Medieninhalte zur Wiedergabe mittels der Wiedergabeeinheit auf die Kommunikationsvorrichtung herunterladbar sind.

Hierdurch wird das Spektrum möglicher Anwendungen für die Kommunikationsvorrichtung nochmals deutlich vergrößert. Sie kann demnach zusätzlich zu der bislang im Fokus stehenden Kommunikationsform auch als Wiedergabevorrichtung für die genannten digitalen Medieninhalte dienen und entspricht insoweit insbesondere der bereits im Handel verfügbaren Tigerbox. Durch die Integration der Kommunikationsfunktion und der Medien-Wiedergabefunktion in einem Gerät (einer Vorrichtung) lässt sich der Ressourcenverbrauch im Kinderzimmer reduzieren, weil es auf diese Weise nicht erforderlich ist, dass Kinder zusätzlich zu der genannten Medien-Wiedergabebox noch über ein Smartphone verfügen oder umgekehrt. Insbesondere kleinere Kinder können auf diese Weise sicher mit Freunden und Familienangehörigen kommunizieren und gleichzeitig mittels derselben Vorrichtung auch digitalen Medieninhalte genießen. Diese Weiterbildung des erfindungsgemäßen Systems ist deshalb als besonders vorteilhaft anzusehen.

Im Zuge einer konkreten, kommerziellen Ausgestaltung des erfindungsgemäßen Systems ist es möglich, dass ein Benutzer nach Erwerb der eigentlichen Kommunikationsvorrichtung und deren Inbetriebnahme im Netzwerk zusätzlich ein sogenanntes Kommunikationsset erwirbt, welches aus einer Anzahl von grafisch unterscheidbar ausgestalteten Kennungsträgern besteht. Diese können anschließend, wie oben detailliert beschrieben, mittels der ersten und der zweiten Anwendung bestimmten Personen bzw. deren Kommunikationsvorrichtungen (digitalen Endgeräten) zugewiesen werden, vorzugsweise in einem geschützten Anwendungsbereich, der nur für Erziehungsberechtigte nach entsprechender Authentifizierung zugänglich ist. Auf diese Weise werden die genannten Konfigurationsdaten festgelegt bzw. erzeugt oder geändert, welche anschließend in Abhängigkeit von einem verwendeten Kennungsträger einen sicheren, vordefinierten Kommunikationskanal aufbauen, wie beschrieben.

Weitere Eigenschaften und Vorteile der Erfindung ergeben sich aus der nachfolgenden Beschreibung von Ausführungsbeispielen anhand der Zeichnung.
- Figur 1: zeigt eine schematische Darstellung einer Ausgestaltung der erfindungsgemäßen Kommunikationsvorrichtung; und
- Figur 2: zeigt schematisch eine mögliche Ausgestaltung des erfindungsgemäßen Systems.

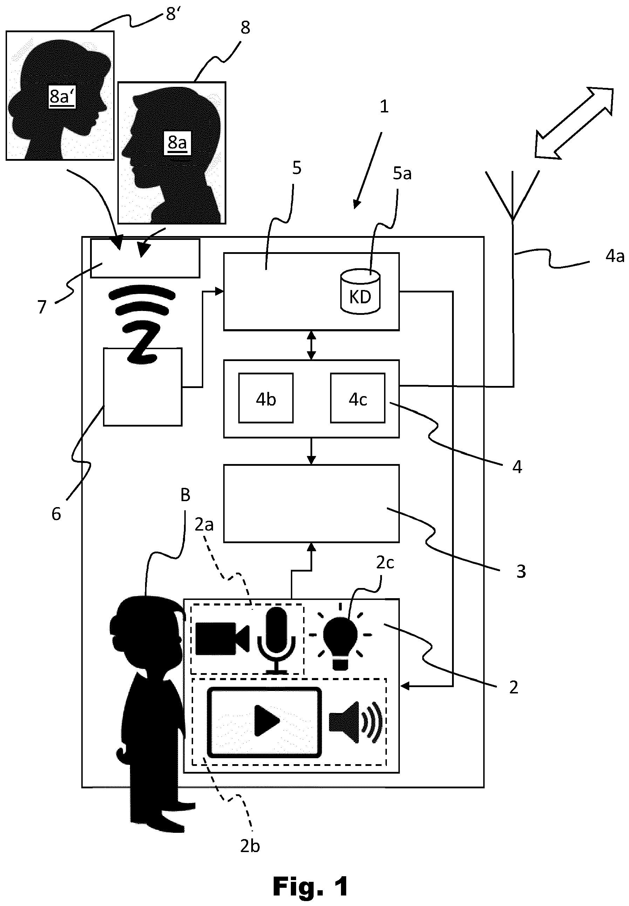

Figur 1 zeigt schematisch eine erfindungsgemäße Kommunikationsvorrichtung, die insgesamt mit dem Bezugszeichen 1 bezeichnet ist. Die Kommunikationsvorrichtung 1 umfasst bei Bezugszeichen 2 Eingabe-/Ausgabemittel, auf die weiter unten noch genauer eingegangen wird. Bezugszeichen 3 zeigt eine Speichereinheit, während Bezugszeichen 4 für eine Kommunikationseinheit steht. Die Kommunikationseinheit 4 weist eine Antenne 4a sowie eine Sendeeinheit 4b und eine Empfangseinheit 4c auf. Die Sendeeinheit 4b ist zum Senden von Daten zu einer anderen Kommunikationsvorrichtung über einen Kommunikationskanal in einem Netzwerk ausgebildet, worauf weiter unten noch genauer eingegangen wird. Die Empfangseinheit 4c ist zum Empfangen von Daten von einer anderen Kommunikationsvorrichtung über einen Kommunikationskanal in einem Netzwerk ausgebildet, worauf ebenfalls weiter unten noch genauer eingegangen wird. Bei Bezugszeichen 5 ist eine Steuereinheit der Kommunikationsvorrichtung 1 dargestellt, die ihrerseits über Speichermittel 5a zum Speichern von zumindest Konfigurationsdaten KD verfügt. Bezugszeichen 6 bezeichnet eine Leseeinheit, vorliegend ein RFID- oder NFC-Lesegerät, die/das zum Lesen einer Kennung 8a, 8a' von auf einem getrennt von der Kommunikationsvorrichtung 1 ausgebildeten Kennungsträger 8 bzw. 8' ausgebildet ist. Vorliegend sind die Kennungsträger 8, 8' als Karten ausgebildet, und die jeweilige Kennung 8a, 8a' ist auf einem in der Karte integrierten RFID- bzw. NFC-Chip gespeichert. Zum Einstecken der Karten bzw. Kennungsträger 8, 8' in die Kommunikationsvorrichtung 1 ist ein Kartenschlitz vorgesehen, der mit Bezugszeichen 7 bezeichnet ist. Auf diese Weise befindet sich ein in dem Kartenschlitz 7 eingesteckter Kennungsträger 8, 8' mit seinem Chip in einem Lesebereich der Leseeinheit 6.

Die Eingabe-/Ausgabemittel 2 umfassen bei Bezugszeichen 2a zunächst eine Aufnahmeeinheit, die zum Aufnehmen von Aufnahmedaten ausgebildet ist, insbesondere Audio- und/oder Videodaten. Konkret dargestellt ist in Figur 1 eine Kamera und ein Mikrofon. Außerdem umfasst ist eine Wiedergabeeinheit 2b, die zum Wiedergeben von Wiedergabedaten ausgebildet ist, insbesondere ebenfalls von Audio- und/oder Videodaten. Konkret dargestellt ist in Figur 1 ein Display und ein Lautsprecher.

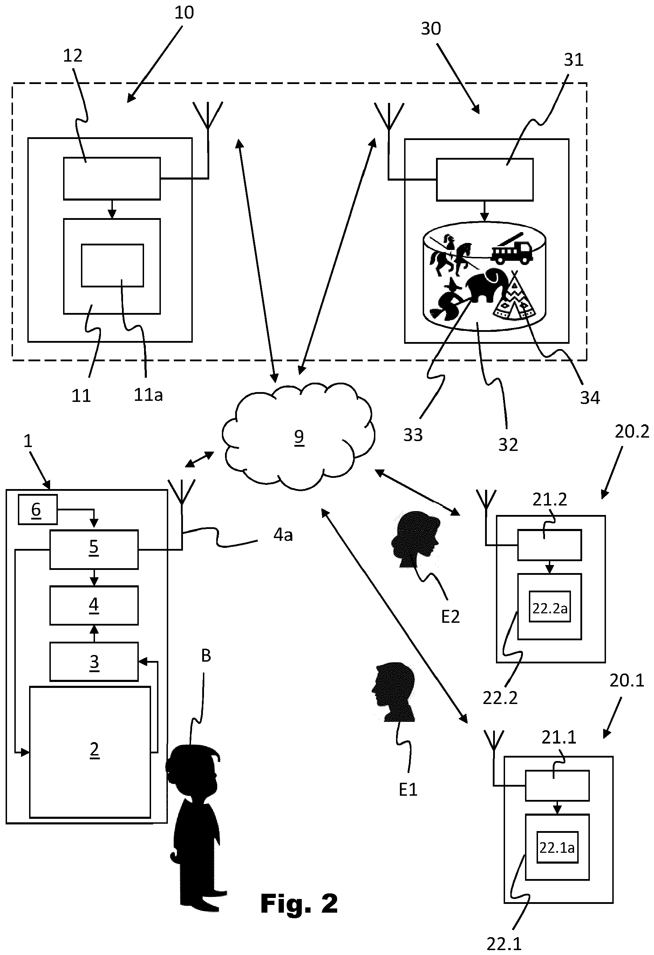

Wie ebenfalls in Figur 1 dargestellt, ist die Kommunikationsvorrichtung 1 zur bevorzugten Benutzung durch einen kindlichen Benutzer B vorgesehen. Das Kind B steckt einen Kennungsträger 8, 8' in den Schlitz 7, wie in Figur 1 durch entsprechende Pfeile angedeutet, woraufhin die Leseeinheit 6 den betreffenden Kennungsträger 8, 8' ausliest und die zugehörige Kennung 8a, 8a' ermittelt. Die ermittelte Kennung 8a, 8a' wird von der Leseeinheit 6 an die Steuereinheit 5 übertragen, die nach Maßgabe der zugehörigen Konfigurationsdaten KD, d.h. nach Durchführung eines entsprechenden Abgleichs dazu ausgebildet ist, in Abhängigkeit von der Kennung zumindest den betreffenden (anderen) Kommunikationsteilnehmer bzw. dessen Kommunikationsvorrichtung eindeutig zu identifizieren und die Kommunikationseinheit 4 der Kommunikationsvorrichtung 1 zum Verbinden der Kommunikationsvorrichtung 1 mit der genannten anderen Kommunikationsvorrichtung über einen zugehörigen Kommunikationskanal anzusteuern. Hierauf wird weiter unten anhand von Figur 2 noch genauer eingegangen. Die entsprechende Kommunikation ist in Figur 1 über einen Block-Doppelpfeil dargestellt.

Die in der Kommunikationsvorrichtung 1 mittels der Aufnahmeeinheit 2a erzeugten Aufnahmedaten können in der Speichereinheit 3 zumindest zwischengespeichert und von dort aus über die Kommunikationseinheit 4 bzw. die Sendeeinheit 4b an einen hierfür vorgesehenen (anderen) Kommunikationsteilnehmer gesendet werden. Umgekehrt können von einem anderen Kommunikationsteilnehmer empfangene Wiedergabedaten, die mittels der Kommunikationseinheit bzw. der Empfangseinheit 4c empfangen wurden, zunächst in der Speichereinheit 3 zumindest zwischengespeichert werden, bevor sie über die Wiedergabeeinheit 2b ausgegeben werden.

Die Speichereinheit 3 kann auch zum (Zwischen-)Speichern von digitalen Mediendaten dienen, die von einem extern bezüglich der Kommunikationsvorrichtung 1 angeordneten Datenserver empfangen werden (über die Empfangseinheit 4c). Hierauf wird weiter unten noch genauer eingegangen.

Bezugszeichen 2c steht symbolisch für ein Anzeigeelement, beispielsweise ein Blinklicht, welches anzeigen kann, wenn auf der Kommunikationsvorrichtung 1 Wiedergabedaten eingegangen sind. Dies kann beispielsweise Verwendung finden, wenn die Kommunikationsvorrichtung 1, wie weiter oben beschrieben, als Mailbox eingesetzt wird. Das Anzeigeelement 2c kann dem Benutzer B entsprechend anzeigen, wenn Wiedergabedaten eingegangen sind, woraufhin der Benutzer B ein entsprechendes Bedien- oder Steuerelement (nicht gezeigt) betätigen kann, um die genannten Wiedergabedaten mittels der Wiedergabeeinheit 2b wiederzugeben. Grundsätzlich ist es möglich, auch diese Funktion mittels eines geeigneten Kennungsträgers zu steuern, beispielsweise eine Karte mit aufgedrucktem Mailbox-Symbol und entsprechender Kennung (die Ansteuerung der entsprechenden Einheiten der Kommunikationsvorrichtung 1 erfolgt auch hier nach Maßgabe entsprechender Konfigurationsdaten KD). Auf gleiche Weise ließe sich die Kommunikationsvorrichtung 1 auch zur Verwendung als Babyphone einrichten, indem beispielsweise ein entsprechender Kennungsträger bei Bezugszeichen 7 eingesteckt wird und die Kommunikationsvorrichtung 1 nach Maßgabe entsprechender Konfigurationsdaten KD in den Babyphone-Modus "umschaltet".

In der Regel wird die in Figur 1 dargestellte Kommunikationsvorrichtung jedoch zur bidirektionalen Kommunikation mit einer anderen Kommunikationsvorrichtung, beispielsweise einem digitalen Endgerät in Form eines Smartphones oder dergleichen, verwendet werden. Regelmäßig wird ein solches digitales Endgerät einem bestimmten Kommunikationsteilnehmer fest zugeordnet sein, der durch einen Kennungsträger 8, 8' bzw. die darauf gespeicherte Kennung 8a, 8a' eindeutig identifizierbar ist. Die Konfigurationsdaten KD versetzen dann die Kommunikationsvorrichtung 1 nach Maßgabe durch die Steuereinheit 5 in Zusammenwirken mit der Kommunikationseinheit 4 bzw. der Sendeeinheit 4b und der Empfangseinheit 4c in die Lage, eine entsprechende Kommunikationsverbindung (Kommunikationskanal) zu dem entsprechend identifizierten Kommunikationsteilnehmer aufzubauen.

Figur 2 zeigt schematisch ein erfindungsgemäßes System, welches eine entsprechende Kommunikation ermöglicht. Bei Bezugszeichen 1 ist wiederum eine erfindungsgemäße Kommunikationsvorrichtung 1 dargestellt, wie sie weiter oben anhand von Figur 1 bereits detailliert beschrieben wurde. Gleiche Bezugszeichen bezeichnen hier und im Folgenden gleiche oder zumindest gleichwirkende Elemente. In Figur 2 sind nicht alle Einzelheiten der Kommunikationsvorrichtung 1 nochmals im Detail dargestellt. Insofern darf auf Figur 1 und die zugehörige Beschreibung verwiesen werden.

Wie man Figur 2 entnimmt, steht die Kommunikationsvorrichtung 1 über ein Computernetzwerk 9, beispielsweise das Internet, mit anderen Kommunikationsvorrichtungen in Wechselwirkung, was in Figur 2 durch entsprechende Doppelpfeile (Kommunikationsverbindungen) symbolisiert ist.

Bezugszeichen 10 bezeichnet die bereits mehrfach erwähnte Verwaltungseinrichtung mit einer Recheneinheit 11, welche die bereits erwähnte erste (Software-)Anwendung 11a ausführt. Bezugszeichen 12 bezeichnet eine Kommunikationseinheit der Verwaltungseinrichtung, damit auch die Verwaltungseinrichtung 10 an der Kommunikation mit den weiteren Kommunikationsvorrichtungen im Netzwerk 9 teilnehmen kann. Bezugszeichen 20.1 und 20.2 bezeichnen digitale Endgeräte, insbesondere in Form von Smartphones, welche einem ersten Elternteil E1 (Vater) und einem zweiten Elternteil E2 (Mutter) zugeordnet sind. Die beiden Elternteile E1, E2 bzw. ihren digitalen Endgeräte 20.1, 20.2 sind über die Kennungsträger 8, 8' gemäß Figur 1 bzw. die darauf gespeicherten Kennungen 8a, 8a' identifizierbar. Dies erfolgt vorzugsweise dergestalt, dass in der Verwaltungseinrichtung 10 bzw. in der dort ausgeführten ersten Anwendung 11a eine Zuordnung zwischen einer Gerätekennung der digitalen Endgeräte 20.1, 20.2 und der auf dem jeweiligen Kennungsträger 8, 8' gespeicherten Kennung 8a, 8a' erzeugt wird. Diese Zuordnung ist vorzugsweise in den Konfigurationsdaten KD enthalten, die in der Kommunikationsvorrichtung 1 und vorzugsweise auch in der Verwaltungseinrichtung 10 abgespeichert sind. Wie bereits mehrfach erwähnt wurde, identifizieren die Konfigurationsdaten hierbei nicht nur das jeweilige Endgerät 20.1, 20.2 des Kommunikationsteilnehmers, sondern legen darüber hinaus auch fest, welche Art der Kommunikationsverbindung zu diesem Gerät jeweils aufgebaut wird und welche Art von Daten übertragen werden. Dies kann hier ganz allgemein auch die Datenqualität, Datenrate oder dergleichen betreffen.

Nur der Vollständigkeit halber sei an dieser Stelle noch erwähnt, dass die digitalen Endgeräte 20.1, 20.2 der Kommunikationsteilnehmer E1, E2 ebenfalls jeweils über eine Recheneinheit 22.1, 22.2 verfügen, auf denen jeweils die weiter oben bereits erwähnte zweite Anwendung (Software-Anwendung) 22.1a, 22.2a ausgeführt wird. Selbstverständlich verfügen beide Endgeräte 20.1, 20.2 auch über eine Kommunikationseinheit 21.1, 21.2, um an der Kommunikation im Netz teilnehmen zu können.

Unter Bezugnahme auf Figur 1 und Figur 2 sei nochmals beispielhaft erläutert, wie der Benutzer B (das Kind) eine beispielhafte Kommunikationsverbindung zu seiner Mutter E2 aufbaut: Das Kind B steckt die der Mutter zugehörige Karte 8' in die Kommunikationsvorrichtung 1, wo die Karte bzw. die auf ihr gespeicherte Kennung 8a' durch die Leseeinheit 6 erkannt bzw. ausgelesen wird. Dies veranlasst die Steuereinheit 5 dazu, im Zusammenwirken mit der Kommunikationseinheit 4 eine Kommunikationsverbindung zum digitalen Endgerät (der Kommunikationsvorrichtung) 20.2 der Mutter E2 aufzubauen. Die Steuereinheit 5 steuert zu diesem Zweck auch die Ausgabe-/Eingabemittel 2 an, und zwar nach Maßgabe durch die Konfigurationsdaten KD, welche festlegen, welche Art von Kommunikation mit dem Endgerät 20.2 der Mutter E2 geführt werden soll, beispielsweise Audio- und Videodaten für einen Video-Chat.

Entsprechende (angepasste) Abläufe gelten für die Kommunikationsvorrichtung zu dem weiteren Erziehungsberechtigten E1. Gleiche oder andere Kommunikationskanäle können zu weiteren Kommunikationspartnern bestehen, beispielsweise Großeltern, Freunden oder dergleichen (hier nicht dargestellt), denen jeweils ein eigener Kennungsträger (mit entsprechender Kennung) zugeordnet ist.

Schließlich ist bei Bezugszeichen 30 in Figur 2 noch ein externer Mediendaten-Server dargestellt, der ebenfalls über eine Kommunikationseinheit 31 zur Teilnahme an der Kommunikation im Netzwerk 9 verfügt. Der Mediendaten-Server 30 verfügt darüber hinaus zumindest noch über eine Speichereinheit 32, auf der digitale Mediendaten in Form von Hörbüchern, Filmen, Lieder oder dergleichen abgespeichert sein können. Beispielhaft steht in Figur 2 Bezugszeichen 33 (Elefant) für eine Tiergeschichte, während Bezugszeichen 34 (Tipi) eine Indianergeschichte bezeichnet. Wie an anderer Stelle beschrieben, können die betreffenden Mediendaten von dem Server 30 über das Netz 9 auf die Kommunikationsvorrichtung 1 heruntergeladen und dort wiedergegeben werden. Auf diese Weise integriert die Kommunikationsvorrichtung 1 die grundlegende Funktion von zwei bislang separaten Geräten, nämlich einer Vorrichtung zur Wiedergabe von digitalen Medieninhalten, speziell für Kinder, und einer sicheren Kommunikationsvorrichtung 1, wie vorstehend beschrieben. Diese weitgehende Funktionsintegration trägt zu einer Ressourcenersparnis bei.

## Patentansprüche

1. Kommunikationsvorrichtung (1), insbesondere für Kinder (B), mit:
einer Aufnahmeeinheit (2a), die zum Aufnehmen von Aufnahmedaten ausgebildet ist, insbesondere Audio- und/oder Videodaten;
einer Wiedergabeeinheit (2b), die zum Wiedergeben von Wiedergabedaten ausgebildet ist, insbesondere Audio- und/oder Videodaten;
einer Kommunikationseinheit (4), die zum Verbinden der Kommunikationsvorrichtung (1) mit wenigstens einer anderen Kommunikationsvorrichtung (10, 30, 20.1, 20.2) über einen Kommunikationskanal in einem Netzwerk (9) ausgebildet ist;
einer Sendeeinheit (4b), die zum Senden zumindest der Aufnahmedaten zu einer anderen Kommunikationsvorrichtung über den Kommunikationskanal in dem Netzwerk (9) ausgebildet ist;
einer Empfangseinheit (4c), die zum Empfangen zumindest der Wiedergabedaten von einer anderen Kommunikationsvorrichtung über den Kommunikationskanal in dem Netzwerk (9) ausgebildet ist;
einer Leseeinheit (6), die zum Lesen einer Kennung (8a, 8a') von einem getrennt von der Kommunikationsvorrichtung (1) ausgebildeten Kennungsträger (8, 8') ausgebildet ist; und
einer Steuereinheit (5), die nach Maßgabe von Konfigurationsdaten (KD) dazu ausgebildet ist, in Abhängigkeit von der Kennung (8a, 8a') zumindest die andere Kommunikationsvorrichtung (20.1, 20.2) eindeutig zu identifizieren und die Kommunikationseinheit (4) zum Verbinden der Kommunikationsvorrichtung (1) mit der anderen Kommunikationsvorrichtung (20.1, 20.2) über den Kommunikationskanal anzusteuern.

2. Kommunikationsvorrichtung (1) nach Anspruch 1, bei der die Aufnahmeeinheit (2a) in die Kommunikationsvorrichtung (1) integriert ist oder als von der Kommunikationsvorrichtung (1) separate Aufnahmeeinheit (2a) ausgebildet ist, insbesondere als drahtlos mit der Kommunikationsvorrichtung (1) verbundene oder verbindbare Aufnahmeeinheit (2a).

3. Kommunikationsvorrichtung (1) nach Anspruch 1 oder 2, bei der die Kommunikationseinheit (4) dazu ausgebildet ist, eine Verbindung zu einen Computernetzwerk (9), insbesondere dem Internet, aufzubauen, vorzugsweise drahtlos.

4. Kommunikationsvorrichtung (1) nach einem der Ansprüche 1 bis 3, bei der der Kommunikationskanal ein unidirektionaler oder ein bidirektionaler Kommunikationskanal ist.

5. Kommunikationsvorrichtung (1) nach einem der Ansprüche 1 bis 4, bei der die Aufnahmeeinheit (2a) ein Mikrofon und/oder eine Kamera umfasst.

6. Kommunikationsvorrichtung (1) nach einem der Ansprüche 1 bis 5, bei der die Wiedergabeeinheit (2b) einen Lautsprecher und/oder ein Display umfasst.

7. Kommunikationsvorrichtung (1) nach einem der Ansprüche 1 bis 6, bei der die Leseeinheit (6) als RFID-/NFC-Leseeinheit ausgebildet ist.

8. Kommunikationsvorrichtung (1) nach einem der Ansprüche 1 bis 7, bei der eine Fixierungseinheit (7) für Kennungsträger (8, 8') zum Fixieren eines Kennungsträgers (8, 8') in einem Lesebereich der Leseeinheit (6) vorgesehen ist, insbesondere zum Einstecken eines als Karte ausgebildeten Kennungsträgers (8, 8').

9. Kommunikationsvorrichtung (1) nach einem der Ansprüche 1 bis 8, bei der die Sendeeinheit (4b) die Konfigurationsdaten (KD) von einer externen Verwaltungseinrichtung (10) empfängt, insbesondere mittels der Kommunikationseinheit (4) über das Netzwerk (9).

10. Kommunikationsvorrichtung (1) nach einem der Ansprüche 1 bis 9, bei der durch die Konfigurationsdaten (KD) festgelegt ist, welche Art von Aufnahme- und/oder Wiedergabedaten über welche Art von Kommunikationskanal, beispielsweise Telefonverbindung, Text-Chat, Audio-Chat, Video-Chat, in Verbindung mit welchem Kennungsträger (8, 8') gesendet werden.

11. Kommunikationsvorrichtung (1) nach einem der Ansprüche 1 bis 10, mit einer Babyphone-Funktion, bei deren Aktivierung die Kommunikationsvorrichtung (1) dazu ausgebildet ist, Aufnahmedaten zu senden, ohne Wiedergabedaten zu empfangen.

12. Kommunikationsvorrichtung (1) nach einem der Ansprüche 1 bis 11, mit einer Speichereinheit (3) zum Speichern von Wiedergabedaten und mit einer Mailbox-Funktion, bei deren Aktivierung die Kommunikationsvorrichtung (1) dazu ausgebildet ist, Wiedergabedaten zu speichern und zeitversetzt wiederzugeben, wobei bevorzugt die Kommunikationsvorrichtung (1) dazu ausgebildet ist, den Eingang von Wiedergabedaten anzuzeigen (2c).

13. System mit der Kommunikationsvorrichtung (1) nach einem der vorangehenden Ansprüche und mit einer Verwaltungseinrichtung (10), welche Verwaltungseinrichtung (10) zumindest zeitweise mit der Kommunikationsvorrichtung (1) in einer Kommunikationsverbindung steht und welche Verwaltungseinrichtung (10) eine erste Anwendung (11a) ausführt, mittels welcher ersten Anwendung (11a) die Konfigurationsdaten (KD) festlegbar und/oder änderbar sind.

14. System nach Anspruch 13, weiterhin umfassend ein digitales Endgerät (20.1, 20.2), welches digitale Endgerät (20.1, 20.2) zumindest zeitweise mit der Verwaltungseinrichtung (10) in einer Kommunikationsverbindung steht und welches digitale Endgerät (20.1, 20.2) eine zweite Anwendung 22.1a, 22.2a) ausführt, mittels welcher zweiten Anwendung (22.1a, 22.2a) die erste Anwendung (11a) steuerbar ist.

15. System nach Anspruch 13 oder 14, mit wenigstens einem separat von der Kommunikationsvorrichtung (1) ausgebildeten Kennungsträger (8, 8'), der eine Kennung (8a, 8a') umfasst, die durch die Leseeinheit (6) auslesbar ist, vorzugsweise in Form einer Karte, vorzugsweise einer Karte mit integriertem RFID- oder NFC-Chip, auf welchem Chip die Kennung (8a, 8a') gespeichert ist, bei dem bevorzugt der Kennungsträger (8, 8') eine graphische Ausgestaltung, z.B. eine Form, einen Umriss, eine Farbe, einen Aufdruck oder einen Aufkleber aufweist, die ihn einem Kommunikationsteilnehmer oder einer betreffenden Kennung (8a, 8a') zuordnet.

16. System nach einem der Ansprüche 13 bis 15, mit einem extern bezüglich der Kommunikationsvorrichtung (1) ausgebildeten Datenserver (30), auf welchem Datenserver (30) digitale Medieninhalte gespeichert sind, bei dem die Kommunikationsvorrichtung (1) zumindest zeitweise mit dem Datenserver (30) in einer Kommunikationsverbindung steht, über welche Kommunikationsverbindung eine Auswahl der digitalen Medieninhalte auf die Kommunikationsvorrichtung (1) herunterladbar sind zur Wiedergabe mittels der Wiedergabeeinheit (2b).
